# EUROPÄISCHE PATENTSCHRIFT

(11) **EP 1 242 465 B1**
(45) Veröffentlichungstag und Bekanntmachung des Hinweises auf die Patenterteilung: **27.07.2005**
(21) Anmeldenummer: 00985063.7
(22) Anmeldetag: 18.11.2000
(51) Int. Cl.: C08F 2/00

(54) **VERFAHREN ZUR HERSTELLUNG EINER FLÜSSIGEN POLYMERZUSAMMENSETZUNG SOWIE VERWENDUNG DIESER ZUSAMMENSETZUNG**
METHOD FOR PRODUCING A LIQUID POLYMER COMPOSITION AND THE USE OF THIS COMPOSITION
PROCEDE DE PREPARATION D'UNE COMPOSITION POLYMERE LIQUIDE ET UTILISATION DE LADITE COMPOSITION

(30) Priorität: 30.11.1999 US 450741
(43) Veröffentlichungstag der Anmeldung: 25.09.2002
(73) Patentinhaber: RohMax Additives GmbH, 64293 Darmstadt (DE)
(72) Erfinder: ROOS, Sebastian, 60318 Frankfurt am Main (DE); EISENBERG, Boris, 64289 Darmstadt (DE); MÜLLER, Michael, 64625 Bensheim (DE)
(86) Internationale Anmeldenummer: PCT/EP2000/011491
(87) Internationale Veröffentlichungsnummer: WO 2001/040317

(56) Entgegenhaltungen:
- EP-A- 0 570 093
- EP-A- 0 682 046
- WO-A-97/47661
- US-A- 5 807 937
- US-A- 5 854 364

## Beschreibung

Die Erfindung betrifft ein Verfahren zur Herstellung einer flüssigen Poymerzusammensetzung, wobei man ethylenisch ungesättigte Monomere mittels Initiatoren, die eine übertragbare Atomgruppe aufweisen, und eines oder mehrerer Katalysatoren, die mindestens ein Übergangsmetall umfassen, in Gegenwart von Liganden, die mit dem oder den metallischen Katalysatoren eine Koordinationsverbindung bilden können, polymerisiert. Die Erfindung bezieht sich auch auf die Verwendung dieser Polymerzusammensetzungen sowie auf Verfahren zur Isolierung von Polymeren aus einer solchen Polymerlösung.

Die radikalische Polymerisation ist ein wichtiges kommerzielles Verfahren zur Herstellung einer Vielfalt von Polymeren, wie beispielsweise PMMA und Polystyrol. Nachteilig ist hierbei, daß der Aufbau der Polymere, das Molekulargewicht und die Molekulargewichtsverteilung relativ schlecht gesteuert werden können.

Eine Lösung dieser Probleme liefert das sogenannte ATRP-Verfahren (=Atom Transfer Radical Polymerisation). Es wird angenommen, daß es sich hierbei um eine "lebende" radikalische Polymerisation handelt, ohne daß durch die Beschreibung des Mechanismus eine Beschränkung erfolgen soll. In diesen Verfahren wird eine Übergangsmetallverbindung mit einer Verbindung umgesetzt, welche eine übertragbare Atomgruppe aufweist. Hierbei wird die übertragbare Atomgruppe auf die Übergangsmetallverbindung transferiert, wodurch das Metall oxidiert wird. Bei dieser Reaktion bildet sich ein Radikal, das an ethylenische Gruppen addiert. Die Übertragung der Atomgruppe auf die Übergangsmetallverbindung ist jedoch reversibel, so daß die Atomgruppe auf die wachsende Polymerkette rückübertragen wird, wodurch ein kontrolliertes Polymerisationssystem gebildet wird. Dementsprechend kann der Aufbau des Polymers, das Molekulargewicht und die Molekulargewichtsverteilung gesteuert werden.

Diese Reaktionsführung wird beispielsweise von J-S. Wang, et al., J.Am.Chem.Soc., vol. 117, p.5614-5615 (1995), von Matyjaszewski, Macromolecules, vol.28, p.7901 - 7910 (1995) beschrieben. Darüber hinaus offenbaren die Patentanmeldungen WO 96/30421, WO 97/47661, WO 97/18247, WO 98/40415 und WO 99/10387 Varianten der zuvor erläuterten ATRP.

Der oben beschriebene Mechanismus ist nicht unumstritten. So wird beispielsweise in WO 97/47661 beschrieben, daß die Polymerisation nicht durch einen radikalischen Mechanismus sondern durch Insertion erfolgt. Für die vorliegende Erfindung ist diese Differenzierung jedoch ohne belang, da bei der in WO 97/47661 offenbarten Reaktionsführung Verbindungen verwendet werden, die auch bei einer ATRP eingesetzt werden.

Nachteilig am bekannten ATRP-Polymerisationsverfahren ist, daß die eingesetzten Übergangsmetall-Katalysatoren von den Polymeren abgetrennt werden müssen, da die Übergangsmetalle die Polymere und gegebenenfalls hieraus hergestellte Formkörper einfärben. Darüber hinaus können die Metalle, je nach Verwendung der Polymere, unerwünschte Wirkungen haben. Bisher werden die Polymere aus den Lösungen durch Zugabe von geeigneten Verbindungen, wie beispielsweise Methanol, gefällt und anschließend durch Filtrieren oder Zentrifugieren von der metallhaltigen Lösung abgetrennt. Darüber hinaus kann das Übergangsmetall durch chromatographische Verfahren abgetrennt werden. Diese Verfahren eignen sich jedoch kaum für den großtechnischen Einsatz, da sie aufwendig und teuer sind.

In Anbetracht des Standes der Technik ist es nun Aufgabe der vorliegenden Erfindung, Verfahren zur Herstellung von flüssigen Polymerzusammensetzungen zur Verfügung zu stellen, die im wesentlichen frei von Übergangsmetallverbindungen sind, wobei die in den Zusammensetzungen enthaltenen Polymere eine enge Molekulargewichtsverteilung aufweisen sollen. Insbesondere soll bei der Abtrennung der Übergangsmetallverbindungen die Verwendung von aufwendigen Verfahren, wie chromatographischen Methoden, vermieden werden.

Eine weitere Aufgabe bestand darin, ein kostengünstig durchführbares Verfahren anzugeben, das großtechnisch anwendbar ist. Darüber hinaus sollte das Verfahren mit kommerziell erhältlichen Komponenten leicht und einfach ausführbar sein.

Gelöst werden diese sowie weitere nicht explizit genannten Aufgaben, die jedoch aus den hierin einleitend diskutierten Zusammenhängen ohne weiteres ableitbar oder erschließbar sind, durch ein Verfahren zur Herstellung einer flüssigen Polymerzusammensetzung mit allen Merkmalen des Patentanspruchs 1. Zweckmäßige Abwandlungen des erfindungsgemäßen Verfahrens werden in den auf Anspruch 1 rückbezogenen Unteransprüchen unter Schutz gestellt. Hinsichtlich des Verfahrens zur Herstellung von Polymeren liefert Anspruch 13 eine Lösung der zugrunde liegenden Aufgabe, während die Anspruche 14 und 15 eine gemäß dem vorliegenden Verfahren hergestellten Polymerlösung und ihre bevorzugte Verwendung schützen.

Dadurch, daß man das Übergangsmetall des Katalysators nach der Polymerisation oxidiert und anschließend den Katalysator durch Filtrieren abtrennt, wobei die Zusammensetzung ein Lösungsmittel mit einer Dielektrizitätskonstanten ≤ 4 aufweist, gelingt es auf nicht ohne weiteres vorhersehbare Weise ein Verfahren zur Herstellung einer flüssigen Polymerzusammensetzung zur Verfügung zu stellen, die im wesentlichen frei von Übergangsmetallverbindungen ist, wobei man ethylenisch ungesättigte Monomere mittels Initiatoren, die eine übertragbare Atomgruppe aufweisen, und ein oder mehrere Katalysatoren, die mindestens ein Übergangsmetall umfassen, in Gegenwart von Liganden, die mit dem oder den metallischen Katalysatoren eine Koordinationsverbindung bilden können, polymerisiert. Diese Herstellungsart ist besonders kostengünstig durchführbar.

Daß der Katalysator durch ein herkömmliches Filtrationsverfahren abgetrennt werden kann, falls die Zusammensetzung ein Lösungsmittel mit einer Dielektrizitätskonstanten ≤ 4 aufweist, ist insbesondere deswegen überraschend, weil viele der für die ATRP verwendeten Zusammensetzungen heterogene Systeme sind. Werden diese Reaktionsgemische filtriert, so stellt man fest, daß ein wesentlicher Teil des Übergangsmetallkatalysators nicht im Filter zurück bleibt, da die Korngröße des Katalysators zu gering ist. Eine im wesentlichen vollständige Abtrennung aus der Zusammensetzung ist nicht möglich. Hierbei ist insbesondere zu berücksichtigen, daß die erhaltenen Polymere die Viskosität der Zusammensetzung erhöhen, so daß die Porenweiten der Filter nicht beliebig klein gewählt werden können.

Zugleich lassen sich durch das erfindungsgemäße Verfahren eine Reihe weiterer Vorteile erzielen. Hierzu gehören unter anderem:
⇒ Eine enge Verteilung der Polymere in den durch das Verfahren hergestellten Polymerzusammensetzungen.
⇒ Das erfindungsgemäße Verfahren erlaubt eine hervorragende Kontrolle des Molekulargewichts der in den Zusammensetzungen enthaltenen Polymeren.
⇒ Hinsichtlich Druck, Temperatur und Lösungsmittel ist die Durchführung der Polymerisation relativ unproblematisch, auch bei moderaten Temperaturen werden unter bestimmten Umständen akzeptable Ergebnisse erzielt.
⇒ Das erfindungsgemäße Verfahren ist arm an Nebenreaktionen.
⇒ Das Verfahren ist kostengünstig durchführbar.
⇒ Mit Hilfe des Verfahrens der vorliegenden Erfindung können Polymere mit einem vorher definierten Aufbau und gezielter Struktur hergestellt werden.

In der vorliegenden Erfindung kann jedes radikalisch polymerisierbare Monomer als Monomer dienen. Jedoch sind Monomere zur Polymerisation gemäß der vorliegenden Erfindung besonders geeignet, die der Formel entsprechen: 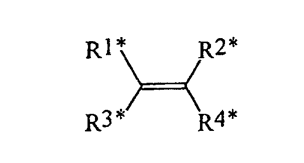 worin R^{1*} und R^{2*} unabhängig ausgewählt sind aus der Gruppe bestehend aus Wasserstoff, Halogene, CN, lineare oder verzweigte Alkylgruppen mit 1 bis 20, vorzugsweise 1 bis 6 und besonders bevorzugt 1 bis 4 Kohlenstoffatomen, welche mit 1 bis (2n+1) Halogenatomen substituiert sein können, wobei n die Zahl der Kohlenstoffatome der Alkylgruppe ist (beispielsweise CF₃), α, β- ungesättigte lineare oder verzweigte Alkenyl- oder Alkynylgruppen mit 2 bis 10, vorzugsweise von 2 bis 6 und besonders bevorzugt von 2 bis 4 Kohlenstoffatomen, welche mit 1 bis (2n-1) Halogenatomen, vorzugsweise Chlor, substituiert sein können, wobei n die Zahl der Kohlenstoffatome der Alkylgruppe, beispielsweise CH₂=CCl-, ist, Cycloalkylgruppen mit 3 bis 8 Kohlenstoffatomen, welche mit 1 bis (2n-1) Halogenatomen, vorzugsweise Chlor, substituiert sein können, wobei n die Zahl der Kohlenstoffatome der Cycloalkylgruppe ist; C(=Y*)R^{5*}, C(=Y*)NR^{6*}R^{7*}, Y*C(=Y*)R^{5*}, SOR^{5*}, SO₂R^{5*}, OSO₂R^{5*}, NR^{8*}SO₂R^{5*}, PR^{5*}₂, P(=Y*)R^{5*}₂, Y*PR^{5*}₂, Y*P(=Y*)R^{5*}₂, NR^{8*}₂ welche mit einer zusätzlichen R^{8*}-, Aryl- oder Heterocyclyl-Gruppe quaternärisiert sein kann, wobei Y* NR^{8*}, S oder O, vorzugsweise O sein kann; R^{5*} eine Alkylgruppe mit 1 bis 20 Kohlenstoffatomen, eine Alkylthio mit 1 bis 20 Kohlenstoffatomen, OR¹⁵ (R¹⁵ ist Wasserstoff oder ein Alkalimetall), Alkoxy von 1 bis 20 Kohlenstoffatomen, Aryloxy oder Heterocyklyloxy ist; R^{6*} und R^{7*} unabhängig Wasserstoff oder eine Alkylgruppe mit 1 bis 20 Kohlenstoffatomen sind, oder R^{6*} und R^{7*} können zusammen eine Alkylengruppe mit 2 bis 7 vorzugsweise 2 bis 5 Kohlenstoffatomen bilden, wobei sie einen 3 bis 8-gliedrigen, vorzugsweise 3 bis 6-gliedrigen Ring bilden, und R^{8*} Wasserstoff, lineare oder verzweigte Alkyl- oder Arylgruppen mit 1 bis 20 Kohlenstoffatomen sind; R^{3*} und R^{4*} unabhängig ausgewählt aus der Gruppe bestehend aus Wasserstoff, Halogen (vorzugsweise Fluor oder Chlor), Alkylgruppen mit 1 bis 6 Kohlenstoffatomen und COOR^{9*}, worin R^{9*} Wasserstoff, ein Alkalimetall oder eine Alkylgruppe mit 1 bis 40 Kohlenstoffatomen ist, sind, oder R^{1*} und R^{3*} können zusammen eine Gruppe der Formel (CH₂)_{n'} bilden, welche mit 1 bis 2n' Halogenatomen oder C₁ bis C₄ Alkylgruppen substituiert sein kann, oder der Formel C(=O)-Y*-C(=O) bilden, wobei n' von 2 bis 6, vorzugsweise 3 oder 4 ist und Y* wie zuvor definiert ist; und wobei zumindest 2 der Reste R^{1*}, R^{2*}, R^{3*} und R^{4*} Wasserstoff oder Halogen sind.

Zu diesen Monomeren gehören unter anderem
Vinylhalogenide, wie beispielsweise Vinylchlorid, Vinylfluorid, Vinylidenchlorid und Vinylidenfluorid;
Vinylester, wie Vinylacetat;
Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäurederivate, wie beispielsweise Maleinsäureanhydrid, Methylmaleinsäureanhydrid, Maleinimid, Methylmaleinimid;
Diene wie beispielsweise Divinylbenzol; und (Meth)acrylate.

Bevorzugte Monomere sind (Meth)acrylate. Der Ausdruck (Meth)acrylate umfaßt Methacrylate und Acrylate sowie Mischungen aus beiden. Diese Monomere sind weithin bekannt. Zu diesen gehören unter anderem (Meth)acrylate, die sich von gesättigten Alkoholen ableiten, wie Methyl(meth)acrylat, Ethyl(meth)acrylat, Propyl(meth)acrylat, Butyl(meth)acrylat, Pentyl(meth)acrylat, Hexyl(meth)acrylat, 2-Ethylhexyl(meth)acrylat, Heptyl(meth)acrylat, 2-tert.-Butylheptyl(meth)acrylat, Octyl(meth)acrylat, 3-iso-Propylheptyl(meth)acrylat, Nonyl(meth)acrylat, Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat, Hexadecyl(meth)acrylat, 2-Methylhexadecyl(meth)acrylat, Heptadecyl(meth)acrylat, 5-iso-Propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Cetyleicosyl(meth)acrylat, Stearyleicosyl(meth)acrylat, Docosyl(meth)acrylat und/oder Eicosyltetratriacontyl(meth)acrylat; (Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat usw.;
Amide und Nitrile der (Meth)acrylsäure, wie N-(3-Dimethylaminopropyl)(meth)acrylamid, N-(Diethylphosphono)(meth)acrylamid, 1-Methacryloylamido-2-methyl-2-propanol, N-(3-Dibutylaminopropyl)(meth)acrylamid, N-t-Butyl-N-(diethylphosphono)(meth)acrylamid, N,N-bis(2-Diethylaminoethyl)(meth)acrylamid, 4-Methacryloylamido-4-methyl-2-pentanol, Methacryloylamidoacetonitril, N-(Methoxymethyl)(meth)acrylamid, N-(2-Hydroxyethyl)(meth)acrylamid, N-(Dimethylaminoethyl)(meth)acrylamid, N-Methyl-N-phenyl(meth)acrylamid, N,N-Diethyl(meth)acrylamid, N-Acetyl(meth)acrylamid, N-Methyl(meth)acrylamid, N,N-Dimethyl(meth)acrylamid, N-Isopropyl(meth)acrylamid;
Aminoalkyl(meth)acrylate, wie tris(2-(meth)acryloxyethyl)amin, N-Methylformamidoethyl(meth)acrylat, 3-Diethylaminopropyl(meth)acrylat, 4-Dipropylaminobutyl(meth)acrylat, 2-Ureidoethyl(meth)acrylat;
andere stickstoffhaltige (meth)acrylate, wie N-((Meth)acryloyloxyethyl)diisobutylketimin, 2-(Meth)acryloyloxyethylmethylcyanamid, Cyanomethyl(meth)acrylat;
Aryl(meth)acrylate, wie Benzyl(meth)acrylat oder Phenyl(meth)acrylat, wobei die Arylreste jeweils unsubstituiert oder bis zu vierfach substituiert sein können;
carbonylhaltige Methacrylate, wie 2-Carboxyethyl(meth)acrylat, N-(2-Methacryloyloxyethyl)-2-pyrrolidinon, N-(3-Methacryloyloxypropyl)-2-pyrrolidinon, Carboxymethyl(meth)acrylat, N-Methacryloylmorpholin, Oxazolidinylethyl(meth)acrylat, N-(Methacryloyloxy)formamid, Acetonyl(meth)acrylat, N-Methacryloyl-2-pyrrolidinon;
Cycloalkyl(meth)acrylate, wie 3-Vinylcyclohexyl(meth)acrylat, Bornyl(meth)acrylat;
Hydroxylalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat; Glycoldi(meth)acrylate, wie 1,4-Butandiol(meth)acrylat, Methacrylate von Etheralkoholen, wie Tetrahydrofurfuryl(meth)acrylat, Vinyloxyethoxyethyl(meth)acrylat, Methoxyethoxyethyl(meth)acrylat, 1-Butoxypropyl(meth)acrylat, 1-Methyl-(2-vinyloxy)ethyl(meth)acrylat, Cyclohexyloxymethyl(meth)acrylat, Methoxymethoxyethyl(meth)acrylat, Benzyloxymethyl(meth)acrylat, Furfuryl(meth)acrylat, 2-Butoxyethyl(meth)acrylat, 2-Ethoxyethoxymethyl(meth)acrylat, 2-Ethoxyethyl(meth)acrylat, Allyloxymethyl(meth)acrylat, 1-Ethoxybutyl(meth)acrylat, Methoxymethyl(meth)acrylat, 1-Ethoxyethyl(meth)acrylat, Ethoxymethyl(meth)acrylat;
Methacrylate von halogenierten Alkoholen, wie 2,3-Dibromopropyl(meth)acrylat, 4-Bromophenyl(meth)acrylat, 1,3-Dichloro-2-propyl(meth)acrylat, 2-Bromoethyl(meth)acrylat, 2-lodoethyl(meth)acrylat, Chloromethyl(meth)acrylat;
Oxiranyl(meth)acrylate, wie 10,11-Epoxyundecyl(meth)acrylat, 2,3-Epoxycyclohexyl(meth)acrylat, 2,3-Epoxybutyl(meth)acrylat, 3,4-Epoxybutyl(meth)acrylat, Glycidyl(meth)acrylat;
Phosphor-, Bor- und/oder Silicium-haltige Methacrylate, wie 2-(Dibutylphosphono)ethyl(meth)acrylat, 2,3-Butylen(meth)acryloylethylborat, 2-(Dimethylphosphato)propyl(meth)acrylat, Methyldiethoxy(meth)acryloylethoxysilan, 2-(Ethylenphosphito)propyl(meth)acrylat, Dimethylphosphinomethyl(meth)acrylat, Dimethylphosphonoethyl(meth)acrylat, Diethyl(meth)acryloylphosphonat, Diethylphosphatoethyl(meth)acrylat, Dipropyl(meth)acryloylphosphat;
schwefelhaltige Methacrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acryloyloxyethyl)sulfid; Tri(meth)acrylate, wie Trimethyloylpropantri(meth)acrylat; heterocyclische (Meth)acrylate, wie 2-(1-Imidazolyl)ethyl(meth)acrylat, 2-(4-Morpholinyl)ethyl(meth)acrylat und 1-(2-Methacryloyloxyethyl)-2-pyrrolidon.

Besonders bevorzugt sind (Meth)acrylate, die sich von gesättigten Alkoholen mit 1 bis 40 C-Atomen, vorzugsweise 6 bis 24 C-Atome ableiten, wobei der Alkoholrest linear oder verzweigt sein kann.

Die Esterverbindungen mit langkettigem Alkoholrest, lassen sich beispielsweise durch Umsetzen von (Meth)acrylaten, Fumaraten, Maleaten und/oder den entsprechenden Säuren mit langkettigen Fettalkoholen erhalten, wobei im allgemeinen eine Mischung von Estern, wie beispielsweise (Meth)acrylaten mit verschieden langkettigen Alkoholresten entsteht. Zu diesen Fettalkoholen gehören unter anderem Oxo Alcohol® 7911 und Oxo Alcohol® 7900, Oxo Alcohol® 1100 von Monsanto; Alphanol® 79 von ICl; Nafol® 1620, Alfol® 610 und Alfol® 810 von Condea; Epal® 610 und Epal® 810 von Ethyl Corporation; Linevol® 79, Linevol® 911 und Dobanol® 25L von Shell AG; Lial 125 von Augusta® Mailand; Dehydad® und Lorol® von Henkel KGaA sowie Linopol® 7-11 und Acropol® 91 Ugine Kuhlmann.

Die zuvor genannten ethylenisch ungesättigten Monomere können einzeln oder als Mischungen eingesetzt werden. In bevorzugten Ausführungsformen des erfindungsgemäßen Verfahrens sind mindestens 50 Gewichtsprozent der Monomere, vorzugsweise mindestens 60 Gewichtsprozent der Monomere, besonders bevorzugt mehr als 80 Gew.-% der Monomere, bezogen auf das Gesamtgewicht der ethylenisch ungesättigten Monomere, (Meth)acrylate. Es ist des weiteren möglich, die Monomerzusammensetzung während der Polymerisation zu variieren, um definierte Strukturen, wie beispielsweise Blockcopolymere, zu erhalten.

Darüber hinaus sind Monomerzusammensetzungen bevorzugt, die mindestens 60 Gewichtsprozent, besonders bevorzugt mehr als 80 Gew.-% (Meth)acrylate mit Alkyl- oder Heteroalkylketten enthalten, die mindestens 6 Kohlenstoffatome aufweisen, bezogen auf da Gesamtgewicht der ethylenisch ungesättigten Monomere.

Neben den (Meth)acrylaten sind auch Maleate und Fumarate bevorzugt, die ebenfalls langkettige Alkoholreste aufweisen.

So umfaßt beispielsweise eine ganz besonders bevorzugte Monomerzusammensetzung folgende ethylenisch ungesättigte Monomere:
a) 60 bis 100 Gew.-%, insbesondere 80 bis 100 Gew.-%, eines oder mehrerer (Meth)acrylate der Formel (I) 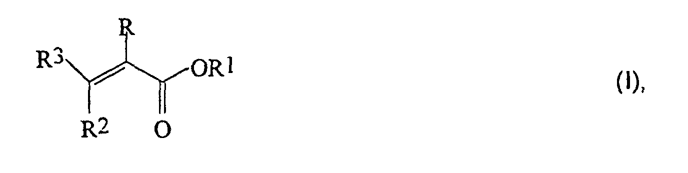 worin R Wasserstoff oder Methyl, R¹ einen linearen oder verzweigten Alkylrest mit 6 bis 40 Kohlenstoffatomen, vorzugsweise 6 bis 24 Kohlenstoffatomen, R² und R³ unabhängig Wasserstoff oder eine Gruppe der Formel -COOR' bedeuten, wobei R' Wasserstoff oder einen linearen oder verzweigten Alkylrest mit 6 bis 40 Kohlenstoffatomen darstellt,
b) 0 bis 40 Gew.-%, insbesondere 0,5 bis 20 Gew.-%, eines oder mehrerer (Meth)acrylate der Formel (II) 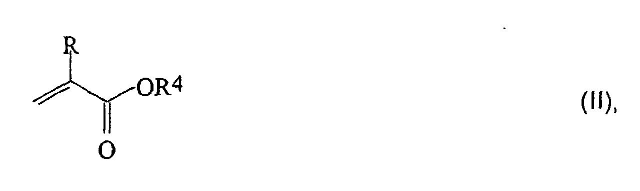 worin R Wasserstoff oder Methyl und R⁴ einen linearen oder verzweigten Alkylrest mit 1 bis 5 Kohlenstoffatomen bedeuten,
c) 0 bis 40 Gew.-%, insbesondere 0,5 bis 20 Gew.-%, eines oder mehrerer (Meth)acrylate der Formel (III) 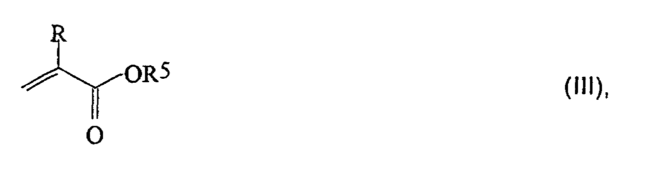 worin R Wasserstoff oder Methyl und R⁵ einen mit einer OH-Gruppe substituierten Alkylrest mit 2 bis 20, insbesondere 2 bis 6 Kohlenstoffatomen oder einen alkoxylierten Rest der Formel (IV) 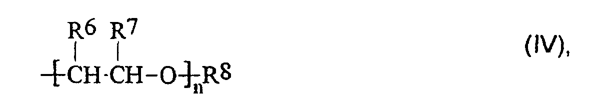 worin R⁶ und R⁷ unabhängig für Wasserstoff oder Methyl, R⁸ Wasserstoff oder einen Alkylrest mit 1 bis 40 Kohlenstoffatomen und n eine ganze Zahl von 1 bis 60 steht, bedeuten,
d) 0 bis 40 Gew.-%, insbesondere 0,5 bis 20 Gew.-% eines oder mehrerer (Meth)acrylate der Formel (V) 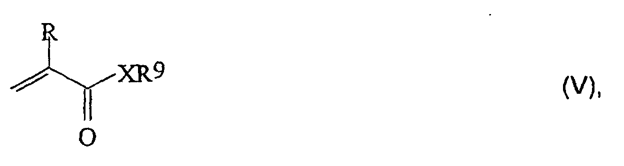 worin R Wasserstoff oder Methyl, X Sauerstoff oder eine Aminogruppe der Formel -NH- oder -NR¹⁰-, worin R¹⁰ für einen Alkylrest mit 1 bis 40 Kohlenstoffatomen steht, und R⁹ einen mit mindestens einer -NR¹¹R¹²-Gruppe substituierten linearen oder verzweigten Alkylrest mit 2 bis 20, vorzugsweise 2 bis 6 Kohlenstoffatomen bedeuten, wobei R¹¹ und R¹² unabhängig von einander für Wasserstoff, einen Alkylrest mit 1 bis 20, vorzugsweise 1 bis 6 stehen oder worin R¹¹ und R¹² unter Einbeziehung des Stickstoffatoms und gegebenenfalls eines weiteren Stickstoff oder Sauerstoffatoms einen 5- oder 6-gliederigen Ring bilden, der gegebenenfalls mit C₁-C₆-Alkyl substituiert sein kann, und
e) 0 bis 40 Gew.-%, insbesondere 0,5 bis 20 Gew.-% eines oder mehrerer Comonomere, wobei sich die Angabe Gew.-% jeweils auf das Gesamtgewicht der ethylenisch ungesättigten Monomere bezieht.

### Beispiele dieser Monomere wurden zuvor dargelegt.

Comonomere sind ethylenisch ungesättigte Monomere, die sich mit den (Meth)acrylaten der Formeln I, II, III und/oder V copolymerisieren lassen. Neben Styrol sind als Comonomere insbesondere Monomere bevorzugt, die dispergierende Wirkungen haben, wie beispielsweise die zuvor genannten heterocyclischen Vinylverbindungen.

Die zuvor genannten Monomere werden mittels Initiatoren, die eine übertragbare Atomgruppe aufweisen, polymerisiert. Im allgemeinen lassen sich diese Initiatoren durch die Formel Y-(X)ₘ beschreiben, worin Y das Kernmolekül darstellt, von dem angenommen wird, daß es Radikale bildet, X ein übertragbares Atom oder eine übertragbare Atomgruppe repräsentiert und m eine ganze Zahl im Bereich von 1 bis 10 darstellt, abhängig von der Funktionalität der Gruppe Y. Falls m > 1 ist, können die verschiedenen übertragbaren Atomgruppen X eine unterschiedliche Bedeutung haben. Ist die Funktionalität des Initiators > 2, so werden sternförmige Polymere erhalten. Bevorzugte übertragbare Atome bzw. Atomgruppen sind Halogene, wie beispielsweise Cl, Br und/oder J.

Wie zuvor erwähnt, wird von der Gruppe Y angenommen, daß sie Radikale bildet, die als Startmolekül dienen, wobei sich dieses Radikal an die ethylenisch ungesättigten Monomere anlagert. Daher weist die Gruppe Y vorzugsweise Substituenten auf, die Radikale stabilisieren können. Zu diesen Substituenten gehören unter anderem -CN, -COR und -CO₂R, wobei R jeweils ein Alkyl- oder Arylrest darstellt, Aryl- und/oder Heteroaryl-Gruppen.

Alkylreste sind gesättigte oder ungesättigte, verzweigte oder lineare Kohlenwasserstoffreste mit 1 bis 40 Kohlenstoffatomen, wie beispielsweise Methyl, Ethyl, Propyl, Butyl, Pentyl, 2-Methylbutyl, Pentenyl, Cyclohexyl, Heptyl, 2-Methylheptenyl, 3-Methylheptyl, Octyl, Nonyl, 3-Ethylnonyl, Decyl, Undecyl, 4-Propenylundecyl, Dodecyl, Tridecyl, Tetradecyl, Pentadecyl, Hexadecyl, Heptadecyl, Octadecyl, Nonadecyl, Eicosyl, Cetyleicosyl, Docosyl und/oder Eicosyltetratriacontyl.

Arylreste sind cyclische, aromatische Reste, die 6 bis 14 Kohlenstoffatome im aromatischen Ring aufweisen. Diese Reste können substituiert sein. Substituenten sind beispielsweise lineare und verzweigte Alkylgruppen mit 1 bis 6 Kohlenstoffatome, wie beispielsweise Methyl, Ethyl, Propyl, Butyl, Pentyl, 2-Methylbutyl oder Hexyl; Cycloalkylgruppen, wie beispielsweise Cyclopentyl und Cyclohexyl; aromatische Gruppen, wie Phenyl oder Naphthyl; Aminogruppen, Ethergruppen, Estergruppen sowie Halogenide.

Zu den aromatischen Resten gehören beispielsweise Phenyl, Xylyl, Toluyl, Naphthyl oder Biphenyl.

Der Ausdruck "Heteroaryl" kennzeichnet ein heteroaromatisches Ringsystem, worin mindestens eine CH-Gruppe durch N oder zwei benachbarte CH-Gruppen durch S, O oder NH ersetzt sind, wie ein Rest von Thiophen, Furan, Pyrrol, Thiazol, Oxazol, Pyridin, Pyrimidin und Benzo[a]furan, die ebenfalls die zuvor genannten Substituenten aufweisen können.

Ein erfindungsgemäß verwendbarer Initiator kann jede Verbindung sein, die ein oder mehrere Atome oder Atomgruppen aufweist, welche unter den Polymerisationsbedingungen radikalisch übertragbar ist.

Geeignete Initiatoren umfassen jene der Formeln:

R¹¹R¹²R¹³C-X

R¹¹C(=O)-X

R¹¹R¹²R¹³Si-X

R¹¹R¹²N-X

R¹¹N-X₂

(R¹¹)ₙP(O)ₘ-X₃₋ₙ

(R¹¹O)ₙP(O)ₘ-X₃₋ₙ und

(R¹¹)(R¹²O)P(O)ₘ-X,

worin X ausgewählt ist aus der Gruppe bestehend aus Cl, Br, I, OR¹⁰, [wobei R¹⁰ eine Alkylgruppe von 1 bis 20 Kohlenstoffatomen, wobei jedes Wasserstoffatom unabhängig durch ein Halogenid, vorzugsweise Flurid oder Chlorid ersetzt sein kann, Alkenyl von 2 bis 20 Kohlenstoffatomen, vorzugsweise Vinyl, Alkynyl von 2 bis 10 Kohlenstoffatomen vorzugsweise Acetylenyl, Phenyl, welches mit 1 bis 5 Halogenatomen oder Alkylgruppen mit 1 bis 4 Kohlenstoffatomen substituiert sein kann, oder Aralkyl (arylsubstituiertes Alkyl in welchem die Arylgruppe Phenyl oder substituiertes Phenyl und die Alkylgruppe ein Alkyl mit 1 bis 6 Kohlenstoffatomen darstellt, wie beispielsweise Benzyl) bedeutet;] SR¹⁴, SeR¹⁴, OC(=O)R¹⁴, OP(=O)R¹⁴, OP(=O)(OR¹⁴)₂, OP(=O)OR¹⁴, O-N(R¹⁴)₂, S-C(=S)N(R¹⁴)₂, CN, NC, SCN, CNS, OCN, CNO und N₃ darstellt, wobei R¹⁴ eine Arylgruppe oder eine lineare oder verzweigte Alkylgruppe mit 1 bis 20, vorzugsweise 1 bis 10 Kohlenstoffatomen bedeutet, wobei zwei R¹⁴-Gruppen, falls vorhanden, zusammen einen 5, 6 oder 7-gliedrigen heterocyclischen Ring bilden können; und
R¹¹, R¹² und R¹³ unabhängig ausgewählt sind aus der Gruppe bestehend aus Wasserstoff, Halogene, Alkylgruppen mit 1 bis 20, vorzugsweise 1 bis 10 und besonders bevorzugt 1 bis 6 Kohlenstoffatomen, Cycloalkylgruppen mit 3 bis 8 Kohlenstoffatomen, R^{8*}₃Si, C(=Y*)R^{5*}, C(=Y*)NR^{6*}R^{7*}, wobei Y*, R^{5*}, R^{6*} und R^{7*} wie zuvor definiert sind, COCl, OH, (vorzugsweise ist einer der Reste R¹¹, R¹² und R¹³ OH), CN, Alkenyl- oder Alkynylgruppen mit 2 bis 20 Kohlenstoffatomen, vorzugsweise 2 bis 6 Kohlenstoffatomen und besonders bevorzugt Allyl oder Vinyl, Oxiranyl, Glycidyl, Alkylen- oder Alkenylengruppen mit 2 bis 6 Kohlenstoffatomen, welche mit Oxiranyl oder Glycidyl, Aryl, Heterocyclyl, Aralkyl, Aralkenyl (arylsubsituiertes Alkenyl, wobei Aryl wie zuvor definiert ist und Alkenyl Vinyl ist, welches mit ein oder zwei C₁ bis C₆ Alkylgruppen und/oder Halogenatomen, vorzugsweise mit Chlor substituiert ist) substituiert sind, Alkylgruppen mit 1 bis 6 Kohlenstoffatomen, in welchen ein bis alle der Wasserstoffatome, vorzugsweise eines, durch Halogen substituiert sind, (vorzugsweise Fluor oder Chlor, wenn ein oder mehr Wasserstoffatome ersetzt sind, und vorzugsweise Fluor, Chlor oder Brom, falls ein Wasserstoffatom ersetzt ist) Alkylgruppen mit 1 bis 6 Kohlenstoffatomen, die mit 1 bis 3 Substituenten (vorzugsweise 1) ausgewählt aus der Gruppe bestehend aus C₁-C₄ Alkoxy, Aryl, Heterocyclyl, C(=Y*)R^{5*} (wobei R^{5*} wie zuvor definiert ist), C(=Y*)NR^{6*}R^{7*} (wobei R^{6*} und R^{7*} wie zuvor definiert sind), Oxiranyl und Glycidyl substituiert sind; (vorzugsweise sind nicht mehr als 2 der Reste R¹¹, R¹² und R¹³ Wasserstoff, besonders bevorzugt ist maximal einer der Reste R¹¹, R¹² und R¹³ Wasserstoff);
m=0 oder 1; und m=0, 1 oder 2 darstellt.

Zu den besonders bevorzugten Initiatoren gehören Benzylhalogenide, wie p-Chlormethylstyrol, α-Dichlorxylol, α,α-Dichlorxylol, α,α-Dibromxylol und Hexakis(α-brommethyl)benzol, Benzylchlorid, Benzylbromid, 1-Brom-1-phenylethan und 1-Chlor-1-phenylethan;
Carbonsäurederivate, die an der α-Position halogeniert sind, wie beispielsweise Propyl-2-brompropionat, Methyl-2-chlorpropionat, Ethyl-2-chlorpropionat, Methyl-2-brompropionat, Ethyl-2-bromisobutyrat; Tosylhalogenide, wie p-Toluolsulfonylchlorid; Alkylhalogenide, wie Tetrachlormethan, Tribrommethan, 1-Vinylethylchlorid, 1-Vinylethylbromid; und Halogenderivate von Phosphorsäureestern, wie Dimethylphosphorsäurechlorid.

Der Initiator wird im allgemeinen in einer Konzentration im Bereich von 10⁻⁴ mol/L bis 3 mol/L, vorzugsweise im Bereich von 10⁻³ mol/L bis 10⁻¹ mol/L und besonders bevorzugt im Bereich von 5*10⁻² mol/L bis 5*10⁻¹ mol/L eingesetzt, ohne daß hierdurch eine Beschränkung erfolgen soll. Aus dem Verhältnis Initiator zu Monomer ergibt sich das Molekulargewicht des Polymeren, falls das gesamte Monomer umgesetzt wird. Vorzugsweise liegt dieses Verhältnis im Bereich von 10⁻⁴ zu 1 bis 0,5 zu 1, besonders bevorzugt im Bereich von 1*10⁻³ zu 1 bis 5*10⁻² zu 1.

Zur Durchführung der Polymerisation werden Katalysatoren eingesetzt, die mindestens ein Übergangsmetall umfassen. Hierbei kann jede Übergangsmetallverbindung eingesetzt werden, die mit dem Initiator, bzw. der Polymerkette, die eine übertragbare Atomgruppe aufweist, einen Redox-Zyklus bilden kann. Bei diesen Zyklen bilden die übertragbare Atomgruppe und der Katalysator reversibel eine Verbindung, wobei die Oxidationsstufe des Übergangsmetalls erhöht bzw. erniedrigt wird. Man geht davon aus, daß hierbei Radikale freigesetzt bzw. eingefangen werden, so daß die Radikalkonzentration sehr gering bleibt. Es ist allerdings auch möglich, daß durch die Addition der Übergangsmetallverbindung an die übertragbare Atomgruppe die Insertion von ethylenisch ungesättigten Monomeren in die Bindung Y-X bzw. Y(M)_{z}-X ermöglicht bzw. erleichtert wird, wobei Y und X die zuvor genannten Bedeutung haben und M die Monomeren bezeichnet, während z den Polymerisationsgrad darstellt.

Bevorzugte Übergangsmetalle sind hierbei Cu, Fe, Co, Cr, Ne, Sm, Mn, Mo, Ag, Zn, Pd, Pt, Re, Rh, Ir, In, Yd, und/oder Ru, die in geeigneten Oxidationsstufen eingesetzt werden. Diese Metalle können einzeln sowie als Mischung eingesetzt werden. Es wird angenommen, daß diese Metalle die Redox-Zyklen der Polymerisation katalysieren, wobei beispielsweise das Redoxpaar Cu⁺/Cu²⁺ oder Fe²⁺/Fe³⁺ wirksam ist. Dementsprechend werden die Metallverbindungen als Halogenide, wie beispielsweise Chlorid oder Bromid, als Alkoxid, Hydroxid, Oxid, Sulfat, Phosphat, oder Hexafluorophosphat, Trifluor(meth)ansulfat der Reaktionsmischung zugefügt. Zu den bevorzugten metallischen Verbindungen gehören Cu₂O, CuBr, CuCl, Cul, CuN₃, CuSCN, CuCN, CuNO₂, CuNO₃, CuBF₄, Cu(CH₃COO) Cu(CF₃COO), FeBr₂, RuBr₂, CrCl₂ und NiBr₂.

Es können aber auch Verbindungen in höheren Oxidationsstufen, wie beispielsweise CuO, CuBr₂, CuCl₂, CrCl₃ und Fe₂O₃, FeBr₃, eingesetzt werden. In diesen Fällen kann die Reaktion mit Hilfe klassischer Radikalbildner, wie beispielsweise AIBN initiiert werden. Hierbei werden die Übergangsmetallverbindungen zunächst reduziert, da sie mit den aus den klassischen Radikalbildnern erzeugten Radikalen umgesetzt werden. Es handelt sich hierbei um die Reverse-ATRP, wie diese von Wang und Matyjaszewski in Macromolekules (1995), Bd. 28, S. 7572-7573 beschrieben wurde.

Die Menge an in der Polymerisationszusammensetzung vorhandenem wirksamen Katalysator kann über einen großen Bereich variieren. Besonders günstig verläuft die Polymerisation im Rahmen der Erfindung dann, wenn die Menge an wirksamem eingesetztem Übergangsmetallkatalysator > 200 ppm ist, bezogen auf das gesamte Gewicht der Polymerisationszusammensetzung, vermindert um den gegebenenfalls in der Polymerzusammensetzung vorhandenen Anteil einer Quelle, die den wirksamen Anteil des Katalysators erst freisetzt. Wird beispielsweise in Gegenwart von Kupfer der Oxidationsstufe 0 als Quelle für den wirksamen Anteil des Katalysators polymerisiert, ist diejenige Menge an Kupfer von Bedeutung (wirksam), die während der Polymerisation in der Polymerisationszusammensetzung als oxidiertes Kupfer der Oxidationsstufen (I) und (II), vorzugsweise der Oxidationsstufe (I), vorliegt. Die Menge an Kupfer der Oxidationsstufe (II) wird aufgrund der angewandten Bestimmungsmethoden zusammen mit Kupfer der Oxidationsstufe (I) bilanziert.

Für die Bestimmung der gemäß vorliegender Erfindung relevanten Menge (Konzentration) an Übergangsmetall kann man in Abhängigkeit von der Natur der Quelle aus welcher das Übergangsmetall stammt beispielsweise folgende Wege einschlagen.

Geht man vom Metall, z. B. Kupfer, als Quelle aus, so kann man die metallische Quelle nach Beendigung der Polymerisation aus der Zusammensetzung entfernen, z. B. aus dem Ansatz herausnehmen oder durch Filtration abtrennen. In der verbliebenen Polymerzusammensetzung kann gegebenenfalls nach Durchführung an sich bekannter Aufschlußverfahren die Menge des Metalls z. B. durch Atomabsorptionsspektroskopie (AAS) oder Atomemissionsspektroskopie (AES) bestimmt werden. Ermittelt wird demnach die Menge und daraus die Konzentration an Metall derjenigen Oxidationsstufe, die im Verlauf der Polymerisation aus der metallischen Quelle freigesetzt wurde (oxidiert wurde).

Geht man von einer Übergangsmetallverbindung (z. B. Kupfersalz oder Eisensalz) als Quelle aus, so genügt es die Einwaage zu bestimmen und daraus die im System vorhandene maximale Menge des Übergangsmetalls der relevanten Oxidationsstufen abzuleiten.

Wie erwähnt können die Übergangsmetalle als Metall in der Oxidationsstufe null, insbesondere in Mischung mit den zuvor genannten Verbindungen zur Katalyse verwendet werden, wie dies beispielsweise auch bereits in WO 98/40415 dargestellt ist. In diesen Fällen läßt sich die Reaktionsgeschwindigkeit der Umsetzung erhöhen. Man nimmt an, daß hierdurch die Konzentration an katalytisch wirksamer Übergangsmetallverbindung erhöht wird, indem Übergangsmetalle in einer hohen Oxidationsstufe mit metallischem Übergangsmetall komproportionieren.

Das molare Verhältnis Übergangsmetall zu Initiator liegt im allgemeinen im Bereich von 0,0001:1 bis 10:1, vorzugsweise im Bereich von 0,001:1 bis 5:1 und besonders bevorzugt im Bereich von 0,01:1 1 bis 2:1, ohne daß hierdurch eine Beschränkung erfolgen soll.

Die Polymerisation findet in Gegenwart von Liganden statt, die mit dem oder den metallischen Katalysatoren eine Koordinationsverbindung bilden können. Diese Liganden dienen unter anderem zur Erhöhung der Löslichkeit der Übergangsmetallverbindung. Eine weitere wichtige Funktion der Liganden besteht darin, daß die Bildung von stabilen Organometallverbindungen vermieden wird. Dies ist besonders wichtig, da diese stabilen Verbindungen bei den gewählten Reaktionsbedingungen nicht polymerisieren würden. Des weiteren wird angenommen, daß die Liganden die Abstraktion der übertragbaren Atomgruppe erleichtern.

Diese Liganden sind an sich bekannt und beispielsweise in WO 97/18247, WO 98/40415 beschrieben. Diese Verbindungen weisen im allgemeinen ein oder mehrere Stickstoff-, Sauerstoff-, Phosphor- und/oder Schwefelatome auf, über die das Metallatom gebunden werden kann. Viele dieser Liganden lassen sich im allgemeinen durch die Formel R¹⁶-Z-(R¹⁸-Z)ₘ-R¹⁷ darstellen, worin R¹⁶ und R¹⁷ unabhängig H, C₁ bis C₂₀ Alkyl, Aryl, Heterocyclyl bedeuten, die ggf. substituiert sein können. Zu diesen Substituenten zählen u. a. Alkoxyreste und die Alkylaminoreste. R¹⁶ und R¹⁷ können ggf. einen gesättigten, ungesättigten oder heterocyclischen Ring bilden. Z bedeutet O, S, NH, NR¹⁹ oder PR¹⁹, wobei R¹⁹ die gleiche Bedeutung wie R¹⁶ hat. R¹⁸ bedeutet unabhängig eine divalente Gruppe mit 1 bis 40 C-Atomen, vorzugsweise 2 bis 4 C-Atomen, die linear, verzweigt oder cyclisch sein kann, wie beispielsweise eine Methylen-, Ethylen-, Propylen- oder Butylengruppe. Die Bedeutung von Alkyl und Aryl wurde zuvor dargelegt. Heterocyclylreste sind cydische Reste mit 4 bis 12 Kohlenstoffatome, bei denen ein oder mehrere der CH₂-Gruppen des Ringes durch Heteroatomgruppen, wie O, S, NH, und/oder NR, ersetzt sind, wobei der Rest R die gleiche Bedeutung hat wie R¹⁶.

Eine weitere Gruppe von geeigneten Liganden läßt sich durch die Formel 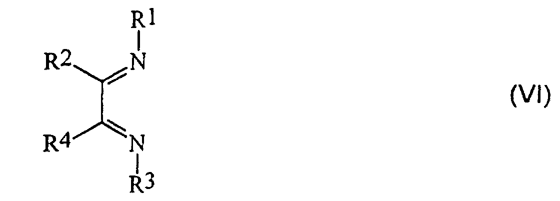 darstellen, worin R¹, R², R³ und R⁴ unabhängig H, C₁ bis C₂₀ Alkyl-, Aryl-, Heterocyclyl- und/oder Heteroarylrest bedeuten, wobei die Reste R¹ und R² bzw. R³ und R⁴ zusammen einen gesättigten oder ungesättigten Ring bilden können.

Bevorzugte Liganden sind hierbei Chelatliganden, die N-Atome enthalten.

Zu den bevorzugten Liganden gehören unter anderem Triphenylphosphan, 2,2-Bipyridin, Alkyl-2,2-bipyridin, wie 4,4-Di-(5-nonyl)-2,2-bipyridin, 4,4-Di-(5-heptyl)-2,2 Bipyridin, Tris(2-aminoethyl)amin (TREN), N,N,N',N',N"-Pentamethyldiethylentriamin, 1,1,4,7,10,10-Hexamethyltriethlyentetramin und/oder Tetramethylethylendiamin. Weitere bevorzugte Liganden sind beispielsweise in WO 97/47661 beschrieben. Die Liganden können einzeln oder als Mischung eingesetzt werden.

Diese Liganden können in situ mit den Metallverbindungen Koordinationsverbindungen bilden oder sie können zunächst als Koordinationsverbindungen hergestellt werden und anschließend in die Reaktionsmischung gegeben werden.

Das Verhältnis Ligand zu Übergangsmetall ist abhängig von der Zähnigkeit des Liganden und der Koordinationszahl des Übergangsmetalls. Im allgemeinen liegt das molare Verhältnis im Bereich 100:1 1 bis 0,1:1, vorzugsweise 6:1 bis 0,1:1 1 und besonders bevorzugt 3:1 bis 0,5:1, ohne daß hierdurch eine Beschränkung erfolgen soll.

Je nach erwünschter Polymerlösung werden die Monomere, die Übergangsmetallkatalysatoren, die Liganden und die Initiatoren ausgewählt. Es wird angenommen, daß eine hohe Geschwindigkeitskonstante der Reaktion zwischen dem Übergangsmetall-Ligand-Komplex und der übertragbaren Atomgruppe wesentlich für eine enge Molekulargewichtsverteilung ist. Ist die Geschwindigkeitskonstante dieser Reaktion zu gering, so wird die Konzentration an Radikalen zu hoch, so daß die typischen Abbruchreaktionen auftreten, die für eine breite Molekulargewichtsverteilung verantwortlich sind. Die Austauschrate ist beispielsweise abhängig von der übertragbaren Atomgruppe, dem Übergangsmetall, der Liganden und dem Anion der Übergangsmetallverbindung. Wertvolle Hinweise zur Auswahl dieser Komponenten findet der Fachmann beispielsweise in WO 98/40415.

Die Polymerisation als Teilschritt des vorliegenden Herstellverfahrens kann mit oder ohne Lösungsmittel durchgeführt werden. Kennzeichnend für das Verfahren ist, daß der Katalysator durch Filtrieren aus einer flüssigen Zusammensetzung abgetrennt wird, die ein Lösungsmittel mit einer Dielektrizitätskonstanten ≤ 4, vorzugsweise ≤ 3 und ganz besonders bevorzugt ≤ 2,5 aufweist. Dieser Wert wird bei 20°C bestimmt, wobei der Fachmann bezüglich der Messung wertvolle Hinweise in Ullmanns Encyklopädie der technischen Chemie, 1966, Band II/2, Seiten 455 bis 479 findet.

Dementsprechend kann ein entsprechendes Lösungsmittel vor dem Filtrieren aber nach der Polymerisation zugeben werden, oder aber die Polymerisation findet in Gegenwart von einem Lösungsmittel statt, dessen Dielektrizitätskonstante ≤ 4 ist. Der Begriff des Lösungsmittels ist hierbei weit zu verstehen. Nicht umgesetzte Monomere, die nach der Polymerisation in der Zusammensetzung verblieben sind, können beispielsweise auch als Lösungsmittel dienen.

Vorzugsweise wird die Polymerisation in einem unpolaren Lösungsmittel durchgeführt. Hierzu gehören Kohlenwasserstofflösungsmittel, wie beispielsweise aromatische Lösungsmittel, wie Toluol, Benzol und Xylol, gesättigte Kohlenwasserstoffe, wie beispielsweise Cyclohexan, Heptan, Octan, Nonan, Decan, Dodecan, die auch verzweigt vorliegen können. Diese Lösungsmittel können einzeln sowie als Mischung verwendet werden. Besonders bevorzugte Lösungsmittel sind Mineralöle und synthetische Öle sowie Mischungen hiervon. Von diesen sind Mineralöle ganz besonders bevorzugt.

Mineralöle sind an sich bekannt und kommerziell erhältlich. Sie werden im allgemeinen aus Erdöl oder Rohöl durch Destillation und/oder Raffination und gegebenenfalls weitere Reinigungs- und Veredelungsverfahren gewonnen, wobei unter den Begriff Mineralöl insbesondere die höhersiedenden Anteile des Roh- oder Erdöls fallen. Im allgemeinen liegt der Siedepunkt von Mineralöl höher als 200 °C, vorzugsweise höher als 300 °C, bei 5000 Pa. Die Herstellung durch Schwelen von Schieferöl, Verkoken von Steinkohle, Destillation unter Luftabschluß von Braunkohle sowie Hydrieren von Stein- oder Braunkohle ist ebenfalls möglich. Zu einem geringen Anteil werden Mineralöle auch aus Rohstoffen pflanzlichen (z. B. aus Jojoba, Raps) od. tierischen (z. B. Klauenöl) Ursprungs hergestellt. Dementsprechend weisen Mineralöle, je nach Herkunft unterschiedliche Anteile an aromatischen, cyclischen, verzweigten und linearen Kohlenwasserstoffen auf.

Im allgemeinen unterscheidet man paraffinbasische, naphtenische und aromatische Anteile in Rohölen bzw. Mineralölen, wobei die Begriffe paraffinbasischer Anteil für längerkettig bzw. stark verzweigte iso-Alkane und naphtenischer Anteil für Cycloalkane stehen. Darüber hinaus weisen Mineralöle, je nach Herkunft und Veredelung unterschiedliche Anteile an n-Alkanen, iso-Alkanen mit einem geringen Verzweigungsgrad, sogenannte monomethylverzweigten Paraffine, und Verbindungen mit Heteroatomen, insbesondere O, N und/oder S auf, denen polare Eigenschaften zugesprochen werden. Der Anteil der n-Alkane beträgt in bevorzugten Mineralölen weniger als 3 Gew.-%, der Anteil der O, N und/oder S-haltigen Verbindungen weniger als 6 Gew.-%. Der Anteil der Aromaten und der monomethylverzweigten Paraffine liegt im allgemeinen jeweils im Bereich von 0 bis 30 Gew.-%. Gemäß einem interessanten Aspekt umfaßt Mineralöl hauptsächlich naphtenische und paraffinbasische Alkane, die im allgemeinen mehr als 13, bevorzugt mehr als 18 und ganz besonders bevorzugt mehr als 20 Kohlenstoffatome aufweisen. Der Anteil dieser Verbindungen ist im allgemeinen ≥ 60 Gew.-%, vorzugsweise ≥ 80 Gew.-%, ohne daß hierdurch eine Beschränkung erfolgen soll.

Eine Analyse von besonders bevorzugten Mineralölen, die mittels herkömmlicher Verfahren, wie Harnstofftrennung und Flüssigkeitschromatographie an Kieselgel, erfolgte, zeigt beispielsweise folgende Bestandteile, wobei sich die Prozentangaben auf das Gesamtgewicht des jeweils eingesetzten Mineralöls beziehen:
n-Alkane mit ca. 18 bis 31 C-Atome:
0,7-1,0%,
gering verzweigte Alkane mit 18 bis 31 C-Atome:
1,0 - 8,0 %,
Aromaten mit 14 bis 32 C-Atomen:
0,4 - 10,7 %,
Iso- und Cyclo-Alkane mit 20 bis 32 C-Atomen:
60,7- 82,4 %,
polare Verbindungen:
0,1 - 0,8 %,
Verlust:
6,9 - 19,4 %.

Wertvolle Hinweise hinsichtlich der Analyse von Mineralölen sowie eine Aufzählung von Mineralölen, die eine abweichende Zusammensetzung aufweisen, findet sich beispielsweise in Ullmanns Encyclopedia of Industrial Chemistry, 5^{th} Edition on CD-ROM, 1997, Stichwort "lubricants and related products".

Synthetische Öle sind unter anderem organische Ester, organische Ether, wie Siliconöle, und synthetische Kohlenwasserstoffe, insbesondere Polyolefine. Sie sind meist etwas teurer als die mineralischen Öle, haben aber Vorteile hinsichtlich ihrer Leistungsfähigkeit. Zur Verdeutlichung soll noch auf die 5 API-Klassen der Grundöltypen (API: American Petroleum Institute) hingewiesen werden, wobei diese Grundöle besonders bevorzugt als Lösungsmittel eingesetzt werden können.

Diese Lösungsmittel werden vor oder während der Filtration, vorzugsweise in einer Menge von 1 bis 99 Gew.-%, besonders bevorzugt von 5 bis 95 Gew.-% und ganz besonders bevorzugt von 10 bis 60 Gew.-%, bezogen auf das Gesamtgewicht der Mischung, eingesetzt. Die Zusammensetzung kann während des Filtrierens auch Lösungsmittel mit einer größeren Dielektrizitätskonstanten aufweisen, wobei deren Menge jedoch dadurch begrenzt wird, daß diese Lösungsmittel keine unvertretbar nachteilige Wirkung auf die Abtrennung des Katalysators ausüben dürfen. Das Verhältnis polares Lösungsmittel (Dielektrizitätskonstante > 4) zu apolarem Lösungsmittel (Dielektrizitätskonstante ≤ 4) ist im allgemeinen kleiner als 1:1, vorzugsweise 1:2 und besonders bevorzugt 1:3, ohne daß hierdurch eine Beschränkung erfolgen soll. Hierbei ist jedoch die Differenz der Dielektrizitätskonstanten zu berücksichtigen.

Die Polymerisation kann bei Normaldruck, Unter- od. Überdruck durchgeführt werden. Auch die Polymerisationstemperatur ist unkritisch. Im allgemeinen liegt sie jedoch im Bereich von -20° - 200°C, vorzugsweise 0° - 130°C und besonders bevorzugt 60° - 120°C, ohne daß hierdurch eine Beschränkung erfolgen soll.

Mit Hilfe des vorliegenden Verfahrens können Polymere mit einer vorgegebenen Architektur auf einfache Weise erhalten werden. Diese Möglichkeiten ergeben sich aus dem "lebenden" Charakter des Polymerisationsverfahrens. Zu diesen Strukturen gehören unter anderem Blockcopolymere, Gradientencopolymere, Sternpolymere, hochverzweigte Polymere, Polymere mit reaktiven Endgruppen und Pfropfcopolymere. Die so hergestellten Polymere weisen im allgemeinen ein Molekulargewicht im Bereich von 1 000 bis 1 000 000 g/mol, vorzugsweise im Bereich von 10*10³ bis 500*10³ g/mol und besonders bevorzugt im Bereich von 20*10³ bis 300*10³ g/mol auf, ohne daß hierdurch eine Beschränkung erfolgen soll. Diese Werte beziehen sich auf das Gewichtsmittel des Molekulargewichts der polydispersen Polymere in der Zusammensetzung.

Der besondere Vorteil von ATRP im Vergleich zur herkömmlichen radikalischen Polymerisationsverfahren besteht darin, daß Polymere mit enger Molekulargewichtsverteilung hergestellt werden können. Ohne daß hierdurch eine Beschränkung erfolgen soll, weisen Polymere, die nach dem erfindungsgemäßen Verfahren erhalten wurden, eine Polydispersität, die durch M_{w}/Mₙ gegeben ist, im Bereich von 1 bis 12, vorzugsweise 1 bis 4,5, besonders bevorzugt 1 bis 3 und ganz besonders bevorzugt 1,05 bis 2 auf.

Nach der Polymerisation wird die Oxidationsstufe des Übergangsmetalls erhöht. Durch die Oxidation des Übergangsmetalls nimmt die Löslichkeit des Katalysators, je nach Wahl des oder der Liganden ab, so daß das Übergangsmetall durch Filtration abgetrennt werden kann, falls ein Lösungsmittel vorhanden ist, dessen Dielektrizitätskonstante ≤ 4 ist.

Die Oxidation des Übergangsmetalls kann mit bekannten Oxidationsmitteln wie beispielsweise Sauerstoff, H₂O₂ oder Ozon durchgeführt werden. Vorzugsweise wird der Katalysator mit Luftsauerstoff oxidiert. Es ist keine vollständige Oxidation des Übergangsmetalls oder der Übergangsmetallverbindung notwendig. In vielen Fällen genügt ein Kontakt der Zusammensetzung mit Luftsauerstoff von wenigen Minuten, um eine ausreichende Ausfällung der Übergangsmetallverbindung zu gewährleisten.

Das Filtrieren ist an sich bekannt und beispielsweise in Ullmann's Encyclopedia of Industrial Chemistry, Fifth Edition, Stichwort "Filtration", beschrieben. Hierunter wird im Rahmen der vorliegenden Erfindung das Abscheiden von Feststoffteilchen aus einer Flüssigkeit mit Hilfe einer porösen Schicht (Filtermittel), die für die Flüssigkeit durchlässig ist, während die Feststoffe zurückgehalten werden, verstanden. Es wird angenommen, daß die Trennung aufgrund der Größenunterschiede erfolgt.

Die Filtermittel bestehen unter anderem aus losen oder verfestigten Feststoffschichten, wie beispielsweise Schüttungen aus Sand, Koks, Kieselgur, Kunststoffen; Filtersteine aus Quarz, Schamotte, Kohle, Kunststoffen; Filtermembranen aus Cellulose-Derivaten, Kunststoffen, Gewebe oder Vliese aus Metall-, Natur-, Kunst- und Glasfasem; Sinterstoffe aus Metall-, Porzellan Glas- u. a. Pulvern.

Zur Verbesserung der Filtrationsergebnisse kann man mit an sich bekannten Filterhilfsmitteln, wie beispielsweise Flockungsmitteln arbeiten, die die Filtrierbarkeit der Teilchen über ihr Zeta-Potential beeinflussen.

Zu den bekannten Filtrationsverfahren gehören unter anderem das Sieben, insbesondere mit Membranen und Mikrofiltern, die Kuchenfiltration, bei der ein Filterkuchen aufgebaut wird, und die Tiefenfiltration, bei der der Feststoff im Filter abgelagert wird. Hierbei kann die Filtration chargenweise oder kontinuierlich erfolgen, wobei eine kontinuierliche Filtration im allgemeinen eine Reinigung des Filters während des Filtrierens erforderlich macht, wie dies beispielsweise bei einer Cross-Flow-Filtration erfolgt.

Die Art des Filterelements ist unkritisch. Der Fachmann wird aufgrund seines Wissens ein entsprechendes auswählen. Zu den bekannten Filterelementen gehören Beutelfilter, Bandfilter, Kerzenfilter, Scheibenfilter, Plattenfilter, Trommelfilter, Blattfilter und Röhrenfilter.

Ein wesentliches Element der Filtration ist ein Druckunterschied, der die Flüssigkeit durch das Filtermedium leitet. Dieser Druckunterschied kann auf jede in der Technik bekannte Weise erzeugt werden. Hierzu gehören Pumpen, die sowohl einen Überdruck als auch ein Unterdruck aufbauen können. Darüber hinaus kann die Flüssigkeit auch direkt durch den Filter gepreßt werden. Je nach Viskosität kann auch eine Höhendifferenz für ein Fließen der Zusammensetzung durch den Filter genügen.

Vorrichtungen zur Durchführung der Filtration sind weithin bekannt und kommerziell erhältlich.

Vorzugsweise wird die Zusammensetzung bei einer Druckdifferenz im Bereich von 0,1 bis 50 bar, vorzugsweise 1 bis 10 bar und besonders bevorzugt 1,5 bis 2,5 bar mit einem Filter einer Siebgröße im Bereich von 0,01 µm bis 1 mm, vorzugsweise 1 µm bis 100 µm und besonders bevorzugt 5 µm bis 100 µm gereinigt. Diese Angaben dienen als Anhaltspunkte, da die Reinigung auch von der Viskosität des Lösungsmittels und der Korngröße des Niederschlags abhängig ist.

Die Filtration findet in einem ähnlichen Temperaturbereich wie die Polymerisation statt, wobei der obere Bereich von der Stabilität des Polymeren abhängig ist. Die untere Grenze ergibt sich aus der Viskosität der Lösung.

Die so hergestellte bei Raumtemperatur oder höheren Temperaturen flüssige Polymerzusammensetzung kann ohne weitere Reinigung beispielsweise als Additiv in Schmierölen verwendet werden. Darüber hinaus kann aus der Zusammensetzung das Polymer isoliert werden. Hierzu kann oder können das Lösungsmittel bzw. verbliebene Monomere durch Destillation abgetrennt werden. Des weiteren können die Polymere durch Fällung aus der Zusammensetzung abgeschieden werden.

Nachfolgend wird die Erfindung durch Beispiele und Vergleichsbeispiele eingehender erläutert, ohne daß die Erfindung auf diese Beispiele beschränkt werden soll.

### Beispiele 1 bis 4 und Vergleichsbeispiel 1

Gemäß der nachfolgenden allgemeinen Versuchsvorschrift wurden alle Polymerisationen durchgeführt.

Die ATRP-Polymerisationsversuche wurden in einem Vierhalsrundkolben durchgeführt, der mit Säbelrührer, Heizpilz, Stickstoffüberleitung und Intensivkühler ausgestattet war. Dabei wurde das Monomergemisch und das jeweilige Lösungsmittel in den in Tabelle 1 angegebenen Mengen im Reaktionskolben vorgelegt und durch Trockeneiszugabe und Überleiten von Stickstoff inertisiert. Anschließend wurde die entsprechende Menge an Katalysator, CuBr oder CuCl, und Ligand (Pentamethyldiethylentriamin (PMDETA)) zugegeben.

Nach Aufheizen auf die 90°C wurde die entsprechende Menge Initiator (Ethyl-2-bromisobutyrat (EBiB) oder para-Toluolsulfonylchlorid (pTSCI)) zugegeben. Die Temperatur im Reaktionskolben wurde auf 100°C erhöht. Nach der einer Reaktionszeit von ca. 20 Stunden wurde die Mischung auf Raumtemperatur abgekühlt. Anschließend wurde das Reaktionsgemisch filtriert, um den Übergangsmetallkatalysator abzutrennen. Hierbei wurde eine Filterpresse der Fa. Seitz mit beheizbarer Metallummantelung (Typ EF 14/2, Baujahr 1990) und Tiefenfilter der Fa. Seitz, deren Typ in Tabelle 2 jeweils angegeben ist, eingesetzt. Das Filtrieren erfolgte bei 100°C und einem Überdruck von 2 bar. Das so erhaltene Filtrat wurde mittels GPC und AAS analysiert, um das erhaltene Polymer und den Gehalt an Übergangsmetall zu charakterisieren.

Die Mengen der jeweils eingesetzten Komponenten sind in Tabelle 1 dargelegt. In Tabelle 1 bezeichnet SM 920 ein von der Fa. Shell AG erhältliches Mineralöl, G 07 ist ein naphthenbasisches Mineralöl, welches ebenfalls von Shell AG zu beziehen ist. PAO 2 bezeichnet ein synthetisches Öl auf Basis von Polyalphaolefinen der Fa. Chevron. Die Mischungen der erfindungsgemäßen Lösungsmittel (SM 920 sowie G 07/PAO 2) haben eine Dielektrizitätskonstante von 2,1 bzw. 2,2. MMA bezeichnet Methylmethacrylat. DPMA wurde durch die Reaktion von ®Dobanol 25L (von Shell AG) mit Methylmethacrylat erhalten. SMA wurde durch die Reaktion von ®Dehydad (von Henkel KGaA) mit Methylmethacrylat erhalten. Bei diesen Reaktionen wurde freigesetztes Methanol abgetrennt. DMAPMA bezeichnet N,N-Dimethylaminopropylmethacrylat. Die Monomermischung hatte eine Dielektrizitätskonstante von 3,0. Das im Vergleichsbeispiel eingesetzte Butylacetat weist eine Dielektrizitätskonstante von 4,5 auf.

In Tabelle 2 sind die erhaltenen Ergebnisse, wie Zahlenmittel des Molekulargewichts Mn und Polydispersität PDI (Mw/Mn) der erhaltenen Polymere sowie der Cu-Gehalt des Filtrats zusammengefaßt.

**Tabelle 1**

| | Katalysator [g] | Ligand [g] | Monomermischung [g] | Initiator [g] | Lösungsmittel [g] |
|---|---|---|---|---|---|
| Bsp. 1 | 0,87 CuBr | 0,78 PMDET A | 360:40 DPMA:MMA | 0,72 EBiB | 400 SM920 |
| Bsp. 2 | 0,09 CuBr | 0,11 PMDET A | 115:32,5:22 DPMA:SMA:MM A | 0,09 EBiB | 235 SM920 |
| Bsp. 3 | 0,19 CuCl | 0,32 PMDET A | 190:22:7,7 DPMA:MMA:DM APMA | 0,28 pTSCl | 90:90 G07:PAO 2 |
| Bsp. 4 | 0,95 CuCl | 1,61 PMDET A | 540:60 DPMA:MMA | 2,95 pTSCl | 222 SM920 |
| Vergl.1 | 0,43 CuCl | 0,72 PMDET A | 225:25 DPMA:MMA | 0,80 pTSCl | 107 Butyl-acetat |

**Tabelle 2**

| Polymerlösung gemäß | Mn [g/mol] | PDI | Filter Typ | Cu-Gehalt [ppm] |
|---|---|---|---|---|
| Beispiel 1 | 86 000 | 1,22 | K 250 | 1 |
| Beispiel 1 | 86 000 | 1,22 | K 800 | 2 |
| Beispiel 2 | 280 000 | 2,10 | K 300 | 2 |
| Beispiel 3 | 150 000 | 1,27 | K 800 | 1 |
| Beispiel 4 | 40 000 | 1,20 | T 1000 | 2 |
| Beispiel 4 | 40 000 | 1,20 | K 800 | 2 |
| Vergl. 1 | 60000 | 1,20 | K 800 | 50 |

## Patentansprüche

1. Verfahren zur Herstellung einer flüssigen Polymerzusammensetzung, bei dem man ethylenisch ungesättigte Monomere mittels Initiatoren, die eine übertragbare Atomgruppe aufweisen, und ein oder mehreren Katalysatoren, die mindestens ein Übergangsmetall umfassen, in Gegenwart von Liganden, die mit dem oder den metallischen Katalysatoren eine Koordinationsverbindung bilden können, polymerisiert, **dadurch gekennzeichnet, daß** man das Übergangsmetall des Katalysators nach der Polymerisation oxidiert und anschließend den Katalysator durch Filtrieren abtrennt, wobei die Zusammensetzung ein Lösungsmittel mit einer Dielektrizitätskonstanten ≤ 4 aufweist.

2. Verfahren gemäß Anspruch 1, **dadurch gekennzeichnet, daß** man die Filtration in Gegenwart eines Lösungsmittels durchführt, dessen Dielektrizitätskonstante ≤ 3 ist.

3. Verfahren gemäß Anspruch 1 oder 2, **dadurch gekennzeichnet, daß** man das Lösungsmittel in einer Menge im Bereich von 1 bis 99 Gew.-%, bezogen auf das Gesamtgewicht der flüssigen Zusammensetzung, einsetzt.

4. Verfahren gemäß Anspruch 3, **dadurch gekennzeichnet, daß** man das Lösungsmittel in einer Menge im Bereich von 5 bis 95 Gew.-%, bezogen auf das Gesamtgewicht der flüssigen Zusammensetzung, einsetzt.

5. Verfahren gemäß Anspruch 4, **dadurch gekennzeichnet, daß** man das Lösungsmittel in einer Menge im Bereich von 10 bis 60 Gew.-%, bezogen auf das Gesamtgewicht der flüssigen Zusammensetzung, einsetzt.

6. Verfahren gemäß einem oder mehreren der vorhergehenden Ansprüche, **dadurch gekennzeichnet, daß** man als Lösungsmittel ein Mineralöl und/oder ein synthetisches Öl einsetzt.

7. Verfahren gemäß einem oder mehreren der vorhergehenden Ansprüche, **dadurch gekennzeichnet, daß** man den Katalysator mit Luftsauerstoff oxidiert.

8. Verfahren gemäß einem oder mehreren der vorhergehenden Ansprüche, **dadurch gekennzeichnet, daß** die eingesetzten Monomere zu mindestens 60 Gew.-%, bezogen auf das Gesamtgewicht der ethylenisch ungesättigten Monomere, (Meth)acrylate, Fumarate und/oder Maleate sind.

9. Verfahren gemäß Anspruch 8, **dadurch gekennzeichnet, daß** man eine Monomerzusammensetzung polymerisiert aufweisend
a) 60 bis 100 Gew.-% eines oder mehrerer (Meth)acrylate der Formel (I) 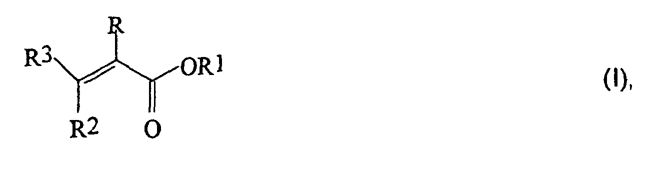 worin R Wasserstoff oder Methyl, R¹ einen linearen oder verzweigten Alkylrest mit 6 bis 40 Kohlenstoffatomen, R² und R³ unabhängig Wasserstoff oder eine Gruppe der Formel -COOR' bedeuten, wobei R' Wasserstoff oder einen linearen oder verzweigten Alkylrest mit 6 bis 40 Kohlenstoffatomen darstellt,
b) 0 bis 40 Gew.-% eines oder mehrerer (Meth)acrylate der Formel (II) 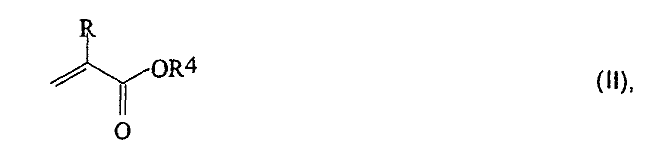 worin R Wasserstoff oder Methyl und R⁴ einen linearen oder verzweigten Alkylrest mit 1 bis 5 Kohlenstoffatomen bedeuten,
c) 0 bis 40 Gew.-% eines oder mehrerer (Meth)acrylate der Formel (III) 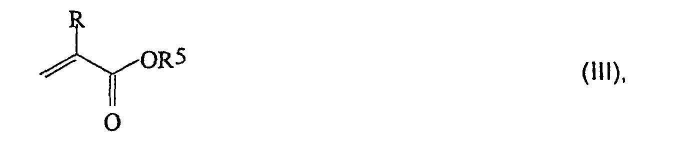 worin R Wasserstoff oder Methyl und R⁵ einen mit einer OH-Gruppe substituierten Alkylrest mit 2 bis 20 Kohlenstoffatomen oder einen alkoxylierten Rest der Formel (IV) 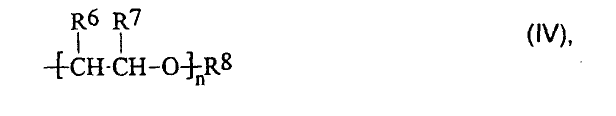 worin R⁶ und R⁷ unabhängig für Wasserstoff oder Methyl, R⁸ Wasserstoff oder einen Alkylrest mit 1 bis 40 Kohlenstoffatomen und n eine ganze Zahl von 1 bis 60 steht, bedeuten,
d) 0 bis 40 Gew.-% eines oder mehrerer (Meth)acrylate der Formel (V) 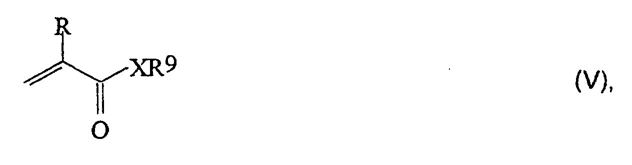 worin R Wasserstoff oder Methyl, X Sauerstoff oder eine Aminogruppe der Formel -NH- oder -NR¹⁰-, worin R¹⁰ für einen Alkylrest mit 1 bis 40 Kohlenstoffatomen steht, und R⁹ einen mit mindestens einer -NR¹¹R¹²-Gruppe substituierten linearen oder verzweigten Alkylrest mit 2 bis 20, vorzugsweise 2 bis 6 Kohlenstoffatomen bedeuten, wobei R¹¹ und R¹² unabhängig voneinander für Wasserstoff, einen Alkylrest mit 1 bis 20, vorzugsweise 1 bis 6 stehen oder worin R¹¹ und R¹² unter Einbeziehung des Stickstoffatoms und gegebenenfalls eines weiteren Stickstoff oder Sauerstoffatoms einen 5- oder 6-gliederigen Ring bilden, der gegebenenfalls mit C₁-C₆-Alkyl substituiert sein kann, und
e) 0 bis 40 Gew.-% eines oder mehrerer Comonomere, wobei sich die Angabe Gew.-% jeweils auf das Gesamtgewicht der ethylenisch ungesättigten Monomere bezieht.

10. Verfahren gemäß einem oder mehreren der vorhergehenden Ansprüche, **dadurch gekennzeichnet, daß** man Cu₂O, CuBr, CuCl, Cul, CuN₃, CuSCN, CuCN, CuNO₂, CuNO₃, CuBF₄, Cu(CH₃COO) oder Cu(CF₃COO) als Katalysator einsetzt.

11. Verfahren gemäß einem oder mehreren der vorhergehenden Ansprüche, **dadurch gekennzeichnet, daß** man mindestens einen Chelatliganden einsetzt, der N-Atome enthält.

12. Verfahren gemäß einem oder mehreren der vorhergehenden Ansprüche, **dadurch gekennzeichnet, daß** man einen Initiator einsetzt, der Cl, Br, I, SCN und/oder N₃ aufweist.

13. Verfahren zur Herstellung von Polymeren, **dadurch gekennzeichnet, daß** man aus einer Polymerlösung, die gemäß einem oder mehreren der Verfahren 1 bis 12 erhalten wurde, das Polymer isoliert.

14. Polymerzusammensetzung mit einer Polydispersität (M_{w}/Mₙ) von 1 bis 3, Welche gelöst ist in einem Minesalöl oder synthetischem Öl oder Mischungen hiervon und gemäß einem oder mehreren der Verfahren der Ansprüche 1 bis 13 erhältlich ist.

15. Verwendung einer Polymerzusammensetzung gemäß Anspruch 14 als Additiv in Schmierölen.

## Claims

1. Process for preparing a liquid polymer composition in which ethylenically unsaturated monomers are polymerised by means of initiators which comprise a transferable atom group, and one or more catalysts which comprise at least one transition metal, in the presence of ligands which are capable of forming a co-ordinating bond with the metallic catalyst or catalysts, **characterised in that** the transition metal of the catalyst is oxidised after the polymerisation and then the catalyst is removed by filtering, the composition comprising a solvent with a dielectric constant of ≤ 4.

2. Process according to claim 1, **characterised in that** the filtration is carried out in the presence of a solvent with a dielectric constant ≤ 3.

3. Process according to claim 1 or 2, **characterised in that** the solvent is used in an amount in the range from 1 to 99 wt.%, based on the total weight of the liquid composition.

4. Process according to claim 3, **characterised in that** the solvent is used in an amount in the range from 5 to 95 wt.%, based on the total weight of the liquid composition.

5. Process according to claim 4, **characterised in that** the solvent is used in an amount in the range from 10 to 60 wt.%, based on the total weight of the liquid composition.

6. Process according to one or more of the preceding claims, **characterised in that** a mineral oil and/or a synthetic oil is used as the solvent.

7. Process according to one or more of the preceding claims, **characterised in that** the catalyst is oxidised with oxygen from the air.

8. Process according to one or more of the preceding claims, **characterised in that** the monomers used are made up of at least 60 wt.%, based on the total weight of ethylenically unsaturated monomers, of (meth)acrylates, fumarates and/or maleates.

9. Process according to claim 8, **characterised in that** a monomer composition is polymerised comprising
a) 60 to 100 wt.% of one or more (meth)acrylates of formula (I) 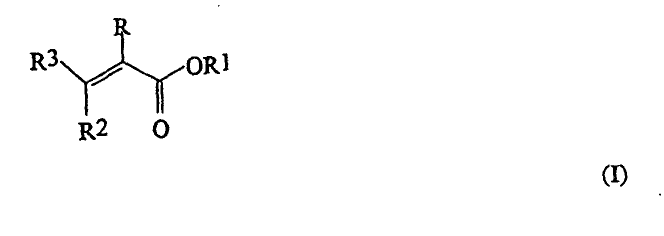 wherein R denotes hydrogen or methyl, R¹ is a straight-chain or branched alkyl group having 6 to 40 carbon atoms, R² and R³ independently represent hydrogen or a group of formula -COOR', wherein R' denotes hydrogen or a straight-chain or branched alkyl group having 6 to 40 carbon atoms,
b) 0 to 40 wt.% of one or more (meth)acrylates of formula (II) 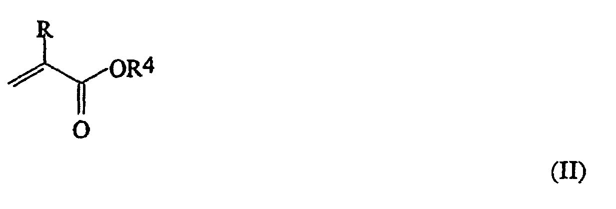 wherein R denotes hydrogen or methyl and R⁴ denotes a straight-chain or branched alkyl group having 1 to 5 carbon atoms,
c) 0 to 40 wt.% of one or more (meth)acrylates of formula (III) 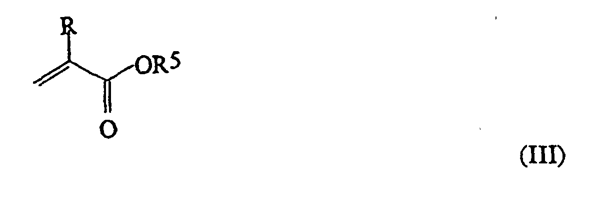 wherein R denotes hydrogen or methyl and R⁵ denotes an alkyl group with 2 to 20 carbon atoms substituted by an OH group, or an alkoxylated group of formula (IV) 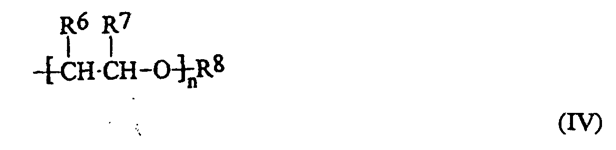 wherein R⁶ and R⁷ independently denote hydrogen or methyl, R⁸ denotes hydrogen or an alkyl group with 1 to 40 carbon atoms and n is an integer from 1 to 60,
d) 0 to 40 wt.% of one or more (meth)acrylates of formula (V) 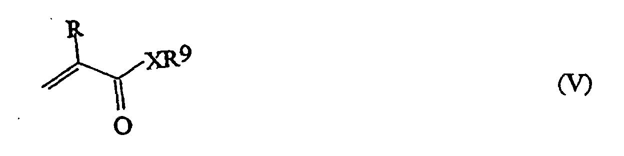 wherein R denotes hydrogen or methyl, X denotes oxygen or an amino group of the formula -NH- or -NR¹⁰-, wherein R¹⁰ denotes an alkyl group with 1 to 40 carbon atoms, and R⁹ denotes a straight-chain or branched alkyl group with 2 to 20, preferably 2 to 6 carbon atoms, substituted by at least one -NR¹¹R¹²-group, wherein R¹¹ and R¹² independently of one another denote hydrogen, an alkyl group with 1 to 20, preferably 1 to 6, or wherein R¹¹ and R¹² together 5- or 6-membered ring which may optionally be substituted by C₁-C₆-alkyl, and
e) 0 to 40 wt.% of one or more comonomers, the percentage by weight being based in each case on the total weight of the ethylenically unsaturated monomers.

10. Process according to one or more of the preceding claims, **characterised in that** Cu₂O, CuBr, CuCl, Cul, CuN₃, CuCN, CuNO₂, CuNO₃, CuBF₄, Cu(CH₃COO) or Cu(CF₃COO) is used as catalyst.

11. Process according to one or more of the preceding claims, **characterised in that** at least one chelate ligand is used which contains N-atoms.

12. Process according to one or more of the preceding claims, **characterised in that** an initiator is used which comprises Cl, Br, I, SCN and/or N₃.

13. Process for preparing polymers, **characterised in that** the polymer is isolated from a polymer solution which has been obtained according to one or more of processes 1 to 12.

14. Polymer composition with a polydispersity (M_{w}/Mₙ) of 1 to 3 which is dissolved in a mineral oil or synthetic oil or mixtures thereof and is obtainable according to one or more of the processes of claims 1 to 13.

15. Use of a polymer composition according to claim 14 as an additive in lubricating oils.

## Revendications

1. Procédé de préparation d'une composition polymère liquide, selon lequel on polymérise des monomères éthyléniquement insaturés au moyen d'initiateurs qui présentent un groupe d'atomes transférable, et d'un ou plusieurs catalyseurs qui comprennent au moins un métal de transition, en présence de ligands qui peuvent former avec le ou les catalyseur(s) métallique(s) une liaison de coordination,
**caractérisé en ce qu'**
on oxyde le métal de transition du catalyseur après la polymérisation, et ensuite on sépare le catalyseur par filtration, la composition présentant un solvant ayant une constante diélectrique ≤ 4.

2. Procédé selon la revendication 1,
**caractérisé en ce qu'**
on conduit la filtration en présence d'un solvant dont la constante diélectrique est ≤ 3.

3. Procédé selon la revendication 1 ou 2,
**caractérisé en ce qu'**
on utilise le solvant en quantité de 1 à 99 % en poids, par rapport au poids total de la composition liquide.

4. Procédé selon la revendication 3,
**caractérisé en ce qu'**
on utilise le solvant en quantité de 5 à 95 % en poids, par rapport au poids total de la composition liquide.

5. Procédé selon la revendication 4,
**caractérisé en ce qu'**
on utilise le solvant en quantité de 10 à 60 % en poids, par rapport au poids total de la composition liquide.

6. Procédé selon une ou plusieurs des revendications précédentes,
**caractérisé en ce que**
comme solvant on utilise une huile minérale et/ou une huile synthétique.

7. Procédé selon une ou plusieurs des revendications précédentes,
**caractérisé en ce qu'**
on oxyde le catalyseur avec l'oxygène de l'air.

8. Procédé selon une ou plusieurs des revendications précédentes,
**caractérisé en ce que**
les monomères utilisés sont, à au moins 60 % en poids par rapport au poids total des monomères éthyléniquement insaturés, des (méth)acrylates, des fumarates et/ou des maléates.

9. Procédé selon la revendication 8,
**caractérisé en ce qu'**
on polymérise une composition monomère présentant
a) de 60 à 100 % en poids d'un ou plusieurs (méth)acrylates de formule (I) 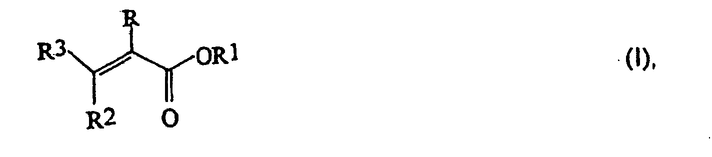 dans laquelle R représente un hydrogène ou un méthyle, R¹ représente un radical alkyle linéaire ou ramifié comportant de 6 à 40 atomes de carbone, R² et R³ représentent indépendamment un hydrogène ou un groupe de formule -COOR', dans laquelle R' représente un hydrogène ou un radical alkyle linéaire ou ramifié comportant de 6 à 40 atomes de carbone,
b) de 0 à 40 % en poids d'un ou plusieurs (méth)acrylates de formule (II) 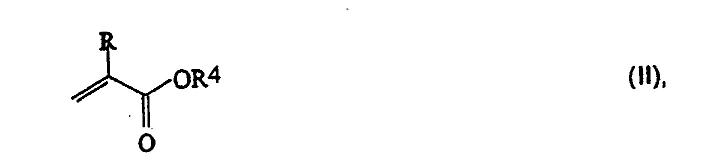 dans laquelle R représente un hydrogène ou un méthyle et R⁴ représente un radical alkyle linéaire ou ramifié comportant de 1 à 5 atomes de carbone,
c) de 0 à 40 % en poids d'un ou plusieurs (méth)acrylates de formule (III) 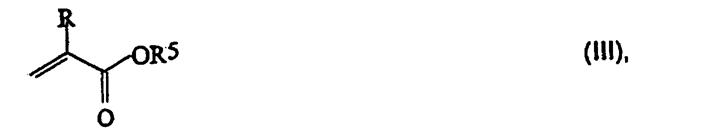 dans laquelle R représente un hydrogène ou un méthyle et R⁵ représente un radical alkyle comportant de 2 à 20 atomes de carbone et substitué par un groupe OH, ou un radical alcoxylé de formule (IV) 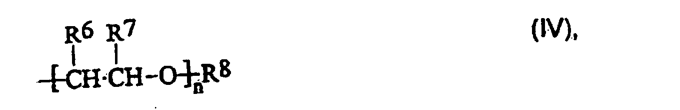 dans laquelle R⁶ et R⁷ représentent indépendamment un hydrogène ou un méthyle, R⁸ représente un hydrogène ou un radical alkyle comportant de 1 à 40 atomes de carbone, et n représente un nombre entier allant de 1 à 60,
d) de 0 à 40 % en poids d'un ou plusieurs (méth)acrylates de formule (V) 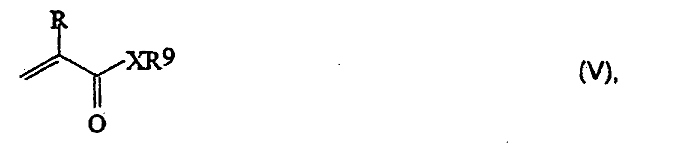 dans laquelle R représente un hydrogène ou un méthyle, X représente un oxygène ou un groupe amino de formule -NH- ou -NR¹⁰-, où R¹⁰ représente un radical alkyle comportant de 1 à 40 atomes de carbone et R⁹ représente un radical alkyle linéaire ou ramifié, comportant de 2 à 20, de préférence de 2 à 6 atomes de carbone, et substitué par au moins un groupe -NR¹¹R¹²- , où R¹¹ et R¹² représentent indépendamment l'un de l'autre un hydrogène, un radical alkyle comportant de 1 à 20, de préférence de 1 à 6 atomes de carbone, ou bien où R¹¹ et R¹² forment, en incluant l'atome d'azote et le cas échéant un autre atome d'azote ou d'oxygène, un noyau à 5 ou 6 chaînons, qui le cas échéant peut être substitué par un alkyle en C₁ à C₆, et
e) de 0 à 40 % en poids d'un ou plusieurs comonomères, l'indication du pourcentage pondéral se rapportant toujours au poids total des monomères éthyléniquement insaturés.

10. Procédé selon une ou plusieurs des revendications précédentes,
**caractérisé en ce que**
comme catalyseur,on utilise Cu₂O, CuBr, CuCl, CuI, CuN₃, CuSCN, CuCN, CuNO₂, CuNO₃, CuBF₄, Cu(CH₃COO) ou Cu(CF₃COO).

11. Procédé selon une ou plusieurs des revendications précédentes,
**caractérisé en ce qu'**
on utilise au moins un ligand de chélate qui contient des atomes d'azote.

12. Procédé selon une ou plusieurs des revendications précédentes,
**caractérisé en ce qu'**
on utilise un initiateur qui présente Cl, Br, I, SCN et/ou N₃.

13. Procédé de préparation de polymères,
**caractérisé en ce qu'**
on isole le polymère à partir d'une solution polymère qui a été obtenue selon un ou plusieurs des procédés 1 à 12.

14. Composition polymère ayant une polydispersité (M_{w}/Mₙ) de 1 à 3, qui est dissoute dans une huile minérale ou une huile synthétique, ou des mélanges de ces huiles, et que l'on peut obtenir selon un ou plusieurs des procédés des revendications 1 à 13.

15. Utilisation d'une composition polymère selon la revendication 14, comme additif dans des huiles de graissage.
